# EUROPEAN PATENT SPECIFICATION

(11) **EP 2 162 014 B1**
(45) Date of publication and mention of the grant of the patent: **27.10.2010**
(21) Application number: 08750267.0
(22) Date of filing: 13.05.2008
(51) Int. Cl.: A23G 9/28, A23G 9/04, A23P 1/00

(54) **PROCESS AND APPARATUS FOR PRODUCING SHAPED FROZEN CONFECTIONS**
VERFAHREN UND VORRICHTUNG ZUR HERSTELLUNG VON GEFORMTEN, GEFRORENEN SÜSSWAREN
PROCÉDÉ ET APPAREIL DE PRODUCTION DE CONFISERIES GLACÉES MISES EN FORME

(30) Priority: 04.07.2007 EP 07111709; 04.07.2007 EP 07111710
(43) Date of publication of application: 17.03.2010
(73) Proprietor: Unilever Plc, A Company Registered In England And Wales under company no. 41424 of Unilever House, 100 Victoria Embankment London EC4Y 0DY (GB); Unilever N.V., 3013 AL Rotterdam (NL)
(72) Inventor: DOEHREN, Paul, Michael, Bedfordshire MK44 1LQ (GB)
(74) Representative: Clarke, Christopher John
(86) International application number: PCT/EP2008/055848
(87) International publication number: WO 2009/003752

(56) References cited:
- EP-A- 1 597 974
- EP-A- 1 769 684
- WO-A-00/78159
- WO-A-99/65325
- WO-A-2004/012519
- US-A1- 2005 214 416

## Description

### Technical field of the invention

The present invention relates to a process and apparatus for producing frozen confectionery products that are shaped in three dimensions. In particular, it relates to an extrusion process.

### Background to the invention

There is a demand for frozen confectionery products with interesting and distinctive shapes. Products that are shaped in two dimensions have been known for many years. They are usually produced by an "extrude and cut" process, in which partially frozen ice cream is extruded though a nozzle and cut by a wire into portions of uniform thickness. The two dimensional shape arises from the shape of the nozzle, but there is no possibility of shaping in the third dimension using this process.

WO 00/78159 discloses a process for shaping confectionery products by horizontol extrusion using a shaping plate which shapes the product in the direction transverse to the direction of extrusion.

Three-dimensional shaped products can be produced by moulding. However, moulding processes have drawbacks, in particular the tendency of the ice cream to stick to the mould. US 4 413 461 discloses a method of shaping ice cream. The problem of ice cream sticking to the mould is solved by blowing air between the mould and the ice cream or by use of a release film between the mould and the ice cream. EP-A-0827696 discloses a method for moulding three dimensional food products in which the mould is at a very low temperature, thereby reducing the adhesion between the product and the mould. However, both of these solutions add cost and complexity to the process. Therefore there remains a need for a simple method of producing frozen confectionery products that are shaped in three dimensions.

### Brief description of the invention

We have developed a simple process for making frozen confectionery products that are shaped in three dimensions, based on the extrude and cut process. Accordingly, in a first aspect the present invention provides a process for shaping a frozen confectionery product, the process comprising:
- extruding a frozen confection from a filling means comprising a cutting means and a nozzle into a cavity which is in fluid communication with the nozzle;
- moving the cavity relative to the filling means so that the cutting means shears the frozen confection and thereby cuts it; and
- removing the frozen confection from the cavity
**characterized in that** the cross-section of the cutting means, when viewed along the direction of relative motion of the cavity and the cutting means, is not a straight line.

Products obtained and obtainable by the process of the invention are also provided.

In a second aspect the present invention provides an apparatus for shaping a frozen confectionery product, the apparatus comprising:
- a cavity,
- a filling means comprising a nozzle and a cutting means, wherein the filling means abuts the cavity so that the nozzle is in fluid communication with the cavity;
- means for moving the cavity relative to the cutting means so that the cutting means shears the frozen confection and thereby cuts it;
- means for removing the frozen confection from the cavity;
**characterized in that** the cross-section of the cutting means, when viewed along the direction of relative motion of the cavity and the cutting means, is not a straight line.

The relative movement between the cutting means and the cavity shears the frozen confection and thereby cuts the flow of frozen confection, in a manner analogous to that of the cutting wire in the conventional extrude and cut process. A process in which relative motion between a flat-ended nozzle and a flat-topped cavity cuts the frozen confection instead of the wire or blade cutter of the conventional extrude and cut process is known from WO-A 99/65325. In this case, the cutting means is the flat end of the nozzle, i.e. the cross-section of the cutting means, when viewed along the direction of relative motion of the cavity and the cutting means, is a straight line. However, this document addresses the unrelated problem of producing extruded products that contain large amounts of inclusions, and makes no mention of the possibility of producing products that are shaped in three dimensions.

In the present invention, the cutting means is not a flat-ended nozzle, so the cut surface of the frozen confection is not planar. Thus the process of the invention allows frozen confections that are shaped in three dimensions to be formed. It is necessary that the cutting means be in close proximity to the opening of the cavity while the cavity is moved relative to the cutting means and the frozen confection is cut. The cutting step requires that the cutting means has translational symmetry along the direction of relative motion of the cavity and cutting means (i.e. it has a constant cross-section when viewed along this direction). For example the cutting means can be a shaped nozzle end. Thus shapes such as a half cylinder can be produced by the process of the invention, but not, for example, a hemisphere.

The nozzle is in fluid communication with the cavity, allowing frozen confection to pass from the filling means into the cavity, and preventing frozen confection from leaking out between the nozzle and the cavity. The frozen confection which is filled into the cavity is of a consistency such that it can be extruded from the nozzle and filled into the cavity, but which is solid enough that it retains its shape on removal from the cavity. The frozen confection is preferably partially frozen ice cream, typically at a temperature of about -5 to -15°C, most preferably from -9 to -12°C.

The cutting means may be a flange around the end of the nozzle which covers the opening of the cavity, thereby preventing frozen confection from overflowing out of the cavity during filling. Preferably the flange is slightly larger than the cavity opening. The nozzle may be narrower than the opening of the cavity, and the flange therefore covers most of the opening of the cavity. A narrow nozzle is suitable for frozen confections which are not highly viscous, so that the frozen confection flows into the cavity and fills it. In another embodiment, the nozzle has the same cross-sectional shape as the opening of the cavity (when viewed along direction of extrusion) then the nozzle closes the cavity and therefore constitutes the cutting means itself. This embodiment is preferred for frozen confections which are highly viscous or of relatively solid consistency, in order to ensure that the cavity is completely filled. Nonetheless, in this case a flange may also be present, in order to make doubly sure that no frozen confection leaks out of the cavity.

Preferably the separation between the cutting means and the opening of the cavity is less than 0.5mm, more preferably less than 0.1mm.

Preferably the cutting means is concave, and the opening of the cavity is correspondingly convex, when viewed along the direction of relative motion of the nozzle, so that the cut surface of the frozen confection is convex.

Preferably the cavity is formed by a mould block and a base. More preferably the base of the cavity is openable, thereby to facilitate removal of the frozen confection.

Optionally the base of the cavity also has a cross-section which is not a straight line when viewed along the direction of relative motion of the cavity and the cutting means. This enables the other side of the product to be shaped in an analogous manner.

Preferably a plurality of cavities is located in a rotating carousel and the thickness of the carousel varies radially across the cavity, thereby providing the shape of the cavity, and hence the shaped product.

### Detailed description of the invention

The present invention will be further by reference to the figures wherein:
Figure 1 shows the conventional extrude and cut process.
Figure 2 is a cross-sectional view of a nozzle and corresponding cavity according to the invention.
Figure 3 shows a top view of the cavity of Figure 2.
Figure 4 shows a side view of the nozzle and cavity at different stages through the process of the invention.
Figure 5 shows a preferred embodiment where the cavities are located in a rotating carousel.
Figure 6 compares a product shaped by the conventional extrude and cut process with a shaped product produced according to the present invention.

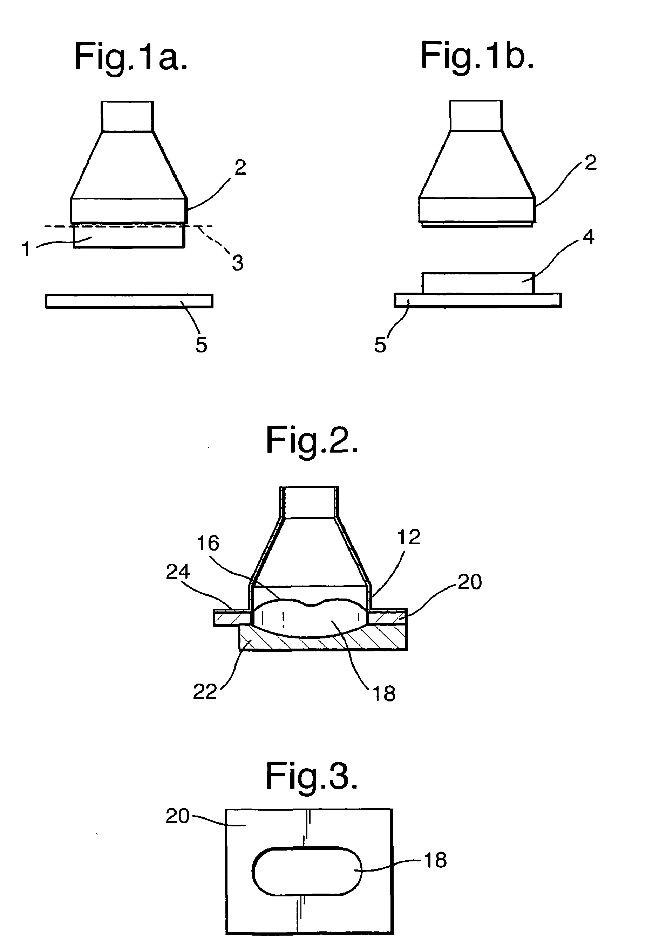

Figures 1 (a) and (b) are schematic diagrams showing the conventional "extrude and cut" process. Extrude and cut-type processes for producing frozen confection products are well-known in the field of frozen confectionery manufacture and are described in, for example, "The Science of Ice Cream", C. Clarke, Royal Society of Chemistry, Cambridge, UK, 2004, p 93-94. Frozen confections (which include ice cream, water ice, frozen yoghurt and the like) are made by freezing and optionally aerating a pasteurised mix of ingredients such as water, fat, sweetener, protein (normally milk proteins), and optionally other ingredients such as emulsifiers, stabilisers, colours and flavours. The frozen confection **1** can then be formed into products by extrusion through a nozzle **2.** The frozen confection **1** is cut into pieces **4** by the cutter **3.** The extruded and cut frozen confection pieces **4** drop onto a conveyor **5,** which transports them through a hardening tunnel.

Figure 2 is a cross-sectional view of a filling means and cavity according to the invention, viewed along the direction of relative motion of the filling means and cavity. The frozen confection is extruded through a nozzle **12** as before. However, the end of the nozzle **16** is not flat, as in Figure 1, but is shaped. In the embodiment shown, it is scalloped, though any suitable shape may be used. Adjacent to the nozzle end **16** is a cavity **18.** In the embodiment shown, the cavity is formed by a mould block **20** and a base **22.** The base need not be flat, but may also be shaped in cross-section. In the embodiment shown the base is concave, though any suitable shape may be used. Once the cavity has been filled, the cavity is moved relative to the nozzle in a direction perpendicular to the paper. The nozzle end has a flange **24** which surrounds and seals the cavity as it is filled with the frozen confection, so that the frozen confection cannot flow out of the cavity.

Figure 3 is a top view of the cavity **18** in the mould block **20** shown in Figure 2. A cavity having straight sides and rounded ends when viewed from above is shown. However any suitable shape may be chosen, for example circular, oval, star-shaped, or even the shape of an animal, cartoon character, face, hand, foot etc.. These sorts of 2D shaped products have been produced for many years by the conventional extrude and cut process, using a nozzle with the appropriate cross-section.

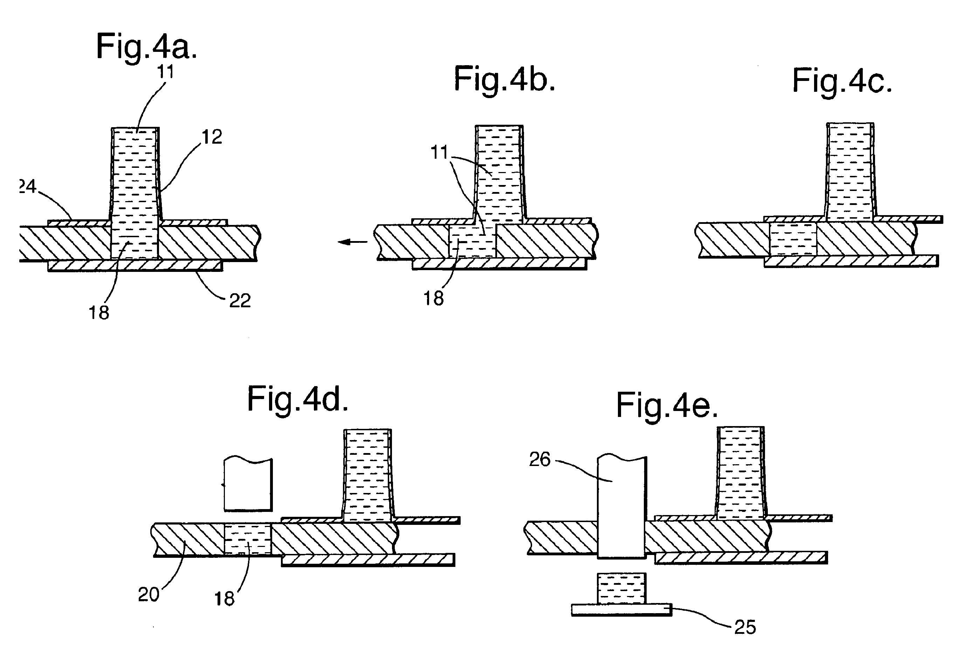

Figure 4 shows side views of the nozzle and cavity through the process according to the invention. In this view, the shaped cross-sections of the nozzle end and cavity are not visible. In figure 4(a) the nozzle **12** and cavity **18** are aligned while the cavity is filled. The flange **24** prevents leakage of the frozen confection from the cavity during filling. Once the cavity is filled with frozen confection **11,** the cavity **18** is moved relative to the nozzle **12** as shown in figures 4(b) and (c). Since the nozzle end is in close proximity to the opening of the cavity, the relative movement between the nozzle end and the cavity shears the frozen confection and thereby cuts the flow of frozen confection, in a manner analogous to that of the cutting wire in the conventional extrude and cut process shown in Figure 1. Thus the end of the nozzle constitutes the cutting means. The base **22** and mould block **20** may also have cross-sections which are not straight lines, when viewed along the direction of relative motion of the cavity and cutting means. This enables the other side of the product to be shaped by an analogous process. Figure 4 shows an embodiment wherein the base **22** is fixed relative to the nozzle so that the bottom of the cavity **18** is opened when the mould block **20** is moved (Figure 4(d)). This allows the shaped frozen confection to be removed (Figure 4(e)) by applying a downward force e.g. by blowing with air, or gently pushing the frozen confection with a plunger **26** from above through the opening at the top of the cavity. When a plunger is used, its end should correspond to the shape of the top of the frozen confection, so that the top of the frozen confection is not altered. When the shaped frozen confection is removed from the cavity, it may land on a plate **25,** which should similarly be shaped to correspond to the bottom of the frozen confection, so that the shape of the bottom of the frozen confection is not altered. Alternatively, the frozen confection may be ejected in to a bath of a cryogenic fluid (such as liquid nitrogen) in order to harden the frozen confection, so that it may subsequently be handled without losing its shape. Once removed, the confections may be taken for further processing, for example hardening, coating in chocolate and packaging.

In the embodiment shown in Figures 2-4, the frozen confection is extruded vertically downwards; however this is not essential. The frozen confection could, for example, be extruded horizontally.

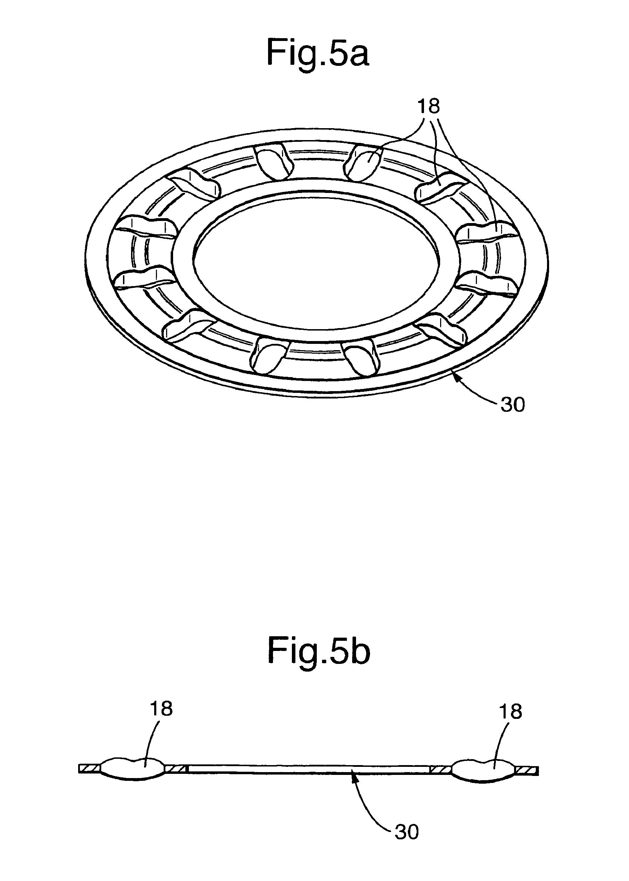

Figures 5(a) (perspective view) and 5(b) (side view) show a preferred embodiment where the mould block in which the cavities **18** are located is a rotating carousel **30.** The nozzle is located at a filling station (not shown); the rotation of the carousel is indexed so that each cavity in turn is placed beneath the nozzle at the filling station. Once the cavity has been filled, the carousel rotates to the next index point, bringing the next cavity into position at the filling station. Further round the carousel is a removing station (also not shown) where the frozen confections are removed from the cavity, for example by the method shown in Figure 4(d) and (e). Figure 5(b) shows a side view of the carousel 30. The cross-sectional shape of the cavity **18** is achieved by varying the thickness of the carousel mould block radially across the cavity.

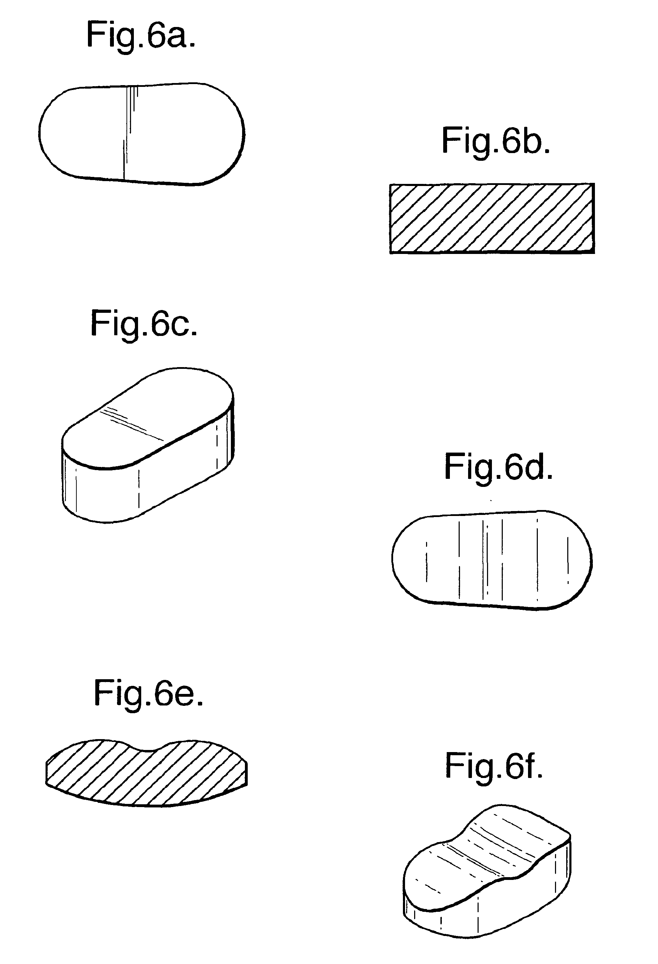

Figures 6 compares a product shaped by the conventional extrude and cut process ((a) - (c)) with a shaped product produced according to the present invention ((d) - (f)). Both products are shaped when viewed from above (Figures 6(a) and 6(d)). The side views show that the conventional product has a rectangular cross-section (Figure 6(b)), whereas the product produced according to the present invention has a shaped cross-section (Figure 6(e)). The perspective views (Figures 6(c) and 6(f)) show the three-dimensional shapes of the products.

The various features and embodiments of the present invention, referred to in individual sections above apply, as appropriate, to other sections, *mutatis mutandis.* Consequently features specified in one section may be combined with features specified in other sections, as appropriate.

## Claims

1. A process for shaping a frozen confectionery product, the process comprising:
• extruding a frozen confection from a filling means comprising a nozzle and a cutting means into a cavity which is in fluid communication with the nozzle;
• moving the cavity relative to the filling means so that the cutting means shears the frozen confection and thereby cuts it; and
• removing the frozen confection from the cavity
**characterized in that** the cross-section of the cutting means, when viewed along the direction of relative motion of the cavity and the cutting means, is not a straight line.

2. A process according to claim 1 wherein the separation between the cutting means and the opening of the cavity is less than 0.5mm.

3. A process according to claim 1 or claim 2 wherein the cutting means is concave and the opening of the cavity is correspondingly convex, when viewed along the direction of relative motion of the nozzle and the cavity.

4. A process according to any of claims 1 to 3 wherein the cutting means is a flange around the end of the nozzle.

5. A process according to claim 4 wherein the nozzle is narrower than the opening of the cavity and the flange covers the opening of the cavity.

6. A process according to any of claims 1 to 3 wherein the nozzle has the same cross-sectional shape as the opening of the cavity and constitutes the cutting means.

7. A process according to any of claims 1 to 6 wherein the cavity is formed by a mould block and a base.

8. A process according to claim 7 wherein the base of the cavity is openable.

9. A process according to claim 7 or claim 8 wherein the base of the cavity has a shaped cross-section.

10. A process according to any of claims 1 to 9 wherein a plurality of cavities is located in a rotating carousel and wherein the thickness of the carousel varies radially across the cavity.

11. An apparatus for shaping a frozen confectionery product, the apparatus comprising:
• a cavity,
• a filling means comprising a nozzle and a cutting means, wherein the filling means abuts the cavity so that the nozzle is in fluid communication with the cavity;
• means for moving the cavity relative to the cutting means so that the cutting means shears the frozen confection and thereby cuts it;
• means for removing the frozen confection from the cavity;
**characterized in that** the cross-section of the cutting means, when viewed along the direction of relative motion of the cavity and the cutting means, is not a straight line.

## Patentansprüche

1. Verfahren zum Formen eines tiefgekühlten Süßwarenprodukts, wobei das Verfahren umfasst:
• Extrudieren einer tiefgekühlten Süßware aus einem Füllmittel, umfassend eine Düse und ein Schneidemittel, in einen Hohlraum, der in Fluidverbindung mit der Düse ist;
• Bewegen des Hohlraums relativ zum Füllmittel, so dass das Schneidemittel eine Scherung auf die tiefgekühlte Süßware ausübt und sie **dadurch** durchschneidet, und
• Entnehmen der tiefgekühlten Süßware aus dem Hohlraum,
**dadurch gekennzeichnet, dass** der Querschnitt des Schneidemittels bei Betrachtung in Richtung der relativen Bewegung des Hohlraums und des Schneidemittels nicht geradlinig ist.

2. Verfahren nach Anspruch 1, wobei der Abstand zwischen dem Schneidemittel und der Öffnung des Hohlraums weniger als 0,5 mm beträgt.

3. Verfahren nach Anspruch 1 oder Anspruch 2, wobei bei Betrachtung in Richtung der relativen Bewegung der Düse und des Hohlraums das Schneidemittel konkav und die Öffnung des Hohlraums entsprechend konvex ist.

4. Verfahren nach einem der Ansprüche 1 bis 3, wobei das Schneidemittel ein Flansch um das Ende der Düse ist.

5. Verfahren nach Anspruch 4, wobei die Düse enger ist als die Öffnung des Hohlraums und der Flansch die Öffnung des Hohlraums bedeckt.

6. Verfahren nach einem der Ansprüche 1 bis 3, wobei die Düse dieselbe Querschnittsform wie die Öffnung des Hohlraums hat und das Schneidemittel bildet.

7. Verfahren nach einem der Ansprüche 1 bis 6, wobei der Hohlraum durch einen Formblock und eine Basis gebildet wird.

8. Verfahren nach Anspruch 7, wobei die Basis des Hohlraums zu öffnen ist.

9. Verfahren nach Anspruch 7 oder Anspruch 8, wobei die Basis des Hohlraums einen angepassten Querschnitt hat.

10. Verfahren nach einem der Ansprüche 1 bis 9, wobei mehrere Hohlräume in einem Drehkarussell angeordnet sind und wobei die Dicke des Karussells sich radial über den Hohlraum verändert.

11. Vorrichtung zum Formen eines tiefgekühlten Süßwarenprodukts, wobei die Vorrichtung umfasst:
• einen Hohlraum,
• ein Füllmittel, umfassend eine Düse und ein Schneidemittel, wobei das Füllmittel an den Hohlraum angrenzt, so dass die Düse in Fluidverbindung mit dem Hohlraum ist;
• Mittel zum Bewegen des Hohlraums relativ zu dem Schneidemittel, so dass das Schneidemittel eine Scherung auf die tiefgekühlte Süßware ausübt und sie **dadurch** durchschneidet;
• Mittel zum Entnehmen der tiefgekühlten Süßware aus dem Hohlraum,
**dadurch gekennzeichnet, dass** der Querschnitt des Schneidemittels bei Betrachtung in Richtung der relativen Bewegung des Hohlraums und des Schneidemittels nicht geradlinig ist.

## Revendications

1. Procédé pour former un produit de confiserie congelé, le procédé comprenant les étapes consistant à :
- extruder une confiserie congelée à partir d'un moyen de remplissage comprenant une buse et un moyen de coupe dans une cavité qui est en communication fluidique avec la buse ;
- déplacer la cavité par rapport au moyen de remplissage de sorte que le moyen de coupe cisaille la confiserie congelée et ainsi la coupe ; et
- retirer la confiserie congelée de la cavité,
**caractérisé en ce que** la section transversale du moyen de coupe, lorsqu'il est vu selon la direction de mouvement relatif de la cavité et du moyen de coupe, n'est pas une ligne droite.

2. Procédé selon la revendication 1, dans lequel la séparation entre le moyen de coupe et l'ouverture de la cavité est inférieure à 0,5 mm.

3. Procédé selon la revendication 1 ou la revendication 2, dans lequel le moyen de coupe est concave et l'ouverture de la cavité est convexe de façon correspondante, lorsqu'ils sont vus selon la direction de mouvement relatif de la buse et de la cavité.

4. Procédé selon l'une quelconque des revendications 1 à 3, dans lequel le moyen de coupe est une bride autour de l'extrémité de la buse.

5. Procédé selon la revendication 4, dans lequel la buse est plus étroite que l'ouverture de la cavité et la bride recouvre l'ouverture de la cavité.

6. Procédé selon l'une quelconque des revendications 1 à 3, dans lequel la buse présente la même forme de section transversale que l'ouverture de la cavité et constitue le moyen de coupe.

7. Procédé selon l'une quelconque des revendications 1 à 6, dans lequel la cavité est formée par un moule-bloc et une base.

8. Procédé selon la revendication 7, dans lequel la base de la cavité peut être ouverte.

9. Procédé selon la revendication 7 ou la revendication 8, dans lequel la base de la cavité possède une section transversale profilée.

10. Procédé selon l'une quelconque des revendications 1 à 9, dans lequel une pluralité de cavités est située dans un carrousel rotatif et dans lequel l'épaisseur du carrousel varie de façon radiale à travers la cavité.

11. Appareil pour former un produit de confiserie congelée, l'appareil comprenant :
- une cavité,
- un moyen de remplissage comprenant une buse et un moyen de coupe, dans lequel le moyen de remplissage est contigu à la cavité de sorte que la buse soit en communication fluide avec la cavité ;
- un moyen pour déplacer la cavité par rapport au moyen de coupe de sorte que le moyen de coupe cisaille la confiserie congelée et la coupe ainsi ;
- un moyen pour retirer la confiserie congelée de la cavité ;
**caractérisé en ce que** la section transversale du moyen de coupe, lorsqu'il est vu selon la direction de mouvement relatif de la cavité et du moyen de coupe, n'est pas une ligne droite.
